# EUROPEAN PATENT SPECIFICATION

(11) **EP 4 139 772 B1**
(45) Date of publication and mention of the grant of the patent: **16.09.2026**
(21) Application number: 20940757.6
(22) Date of filing: 19.06.2020
(51) Int. Cl.: G06F 1/20, H05K 7/20

(54) **CONTROL OF A COOLING DEVICE IN A COMPUTING DEVICE**
STEUERUNG EINER KÜHLVORRICHTUNG IN EINER DATENVERARBEITUNGSVORRICHTUNG
COMMANDE D'UN DISPOSITIF DE REFROIDISSEMENT DANS UN DISPOSITIF INFORMATIQUE

(43) Date of publication of application: 01.03.2023
(73) Proprietor: Hewlett-Packard Development Company, L.P., Spring TX 77389 (US)
(72) Inventor: CHENG, Chao-Wen, Taipei City, 11568 (TW); CHEN, Yu-Fan, Taipei City, 11568 (TW); LIN, Mo-Hsuan, Taipei City, 11568 (TW)
(74) Representative: Plasseraud IP
(86) International application number: PCT/US2020/038745
(87) International publication number: WO 2021/257098

(56) References cited:
- CN-A- 101 290 525
- US-A1- 2006 136 074
- US-A1- 2008 065 869
- US-A1- 2010 312 415
- US-A1- 2011 077 796

## Description

### BACKGROUND

The processing unit of a computing device processes different computational tasks. The processing unit, during the course of its operation, may generate thermal energy. The thermal energy may be dissipated by a cooling device, such as a cooling fan. The cooling device may be controlled based on the temperature of the processing unit. US20110077796 discloses a fan control system for a computer system.

### SUMMARY OF INVENTION

The scope of the invention is defined by the appended claims.

### BRIEF DESCRIPTION OF DRAWINGS

The detailed description is provided with reference to the accompanying figures, wherein:
FIG. 1 illustrates a computing device to control an operating speed of a cooling device, according to an example;
FIG. 2 illustrates a block diagram of a computing device to control an operating speed of a cooling device based on an operating mode, according to another example;
FIG. 3 is a graph depicting changes in operating mode of the computing device, according to an example;
FIG. 4 illustrates a method for controlling an operating speed of a cooling device based on an operating mode, according to an example;
FIG. 5 illustrates a method for controlling an operating speed of a cooling device based on an operating mode, according to another example; and
FIG. 6 illustrates a non-transitory computer readable medium for controlling an operating speed of a cooling device of a computing device, according to an example.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

In a computing device, various computing tasks may impose different computational loads on a processing unit. For example, computing tasks such as emailing, and web browsing, may impose less computational loads when compared to tasks involving high-end graphical processing, which in turn may impose higher computational loads on the processing unit. In event of high computational loads, computing device may switch to a high-performance mode in which an operating frequency of the processing unit may be increased for handling the high computational load. The processing unit may then be maintained in the high-performance mode for a predefined period of time or till the high computational load is addressed. As the processing unit is switched to the high-performance mode, the power consumption of the processing unit may also increase. Such an increase in power consumption may result in an increased heat generated by the processing unit. At this stage, an appropriate cooling device of the computing device (e.g., a CPU fan or a cooling fan) may be activated to dissipate the heat generated by the processing unit, and to ensure that the processing unit continues to operate within prescribed operating threshold temperatures.

It may be noted that the cooling devices for the processing unit are activated, when a predefined temperature threshold is reached by the processing unit. During such time, the operation of the processing unit may be throttled until the temperature of the processing unit reduces to a predefined temperature limit. As a result of the throttling of the processing unit, the time duration for which the high-performance mode may have persisted, consequently reduces. Such premature termination of the high-performance mode reduces the efficiency of the processing unit while handling high computational loads.

To increase the rate at which the processing unit may be cooled may involve replacing an existing cooling device, or in some cases, redesigning the cooling mechanism. For example, a higher rate device may be provided with the processing unit to ensure quicker cooling of the processing unit. However, such changes may involve additional costs or a complete redesign of the computing device itself to ensure quicker dissipation of heat generated by the processing unit. In many cases, installing a higher rated cooling device may not be possible owing to limited form factor of different types computing devices (e.g., in case of ultra-books, and laptops). Furthermore, the cooling systems for the processing unit are activated when the processing unit reaches the predefined temperature threshold. Such systems are more reactive in nature and are activated on the processing unit reaching the predefined temperature threshold and may not be suitable for processing units which may operate in high-performance modes.

Approaches for controlling an operating speed of a cooling device of a computing device, are described. In an example, a computing device may include a processing unit. In an example, the processing unit may be coupled to a voltage regulator which provides an output load current to the processing unit. In the context of a processing unit, the value of current drawn from the voltage regulator by the processing unit may be dependent on a mode in which the processing unit may be operating in. For example, while operating in a normal operating mode, the processing unit may be drawing a lower current, as compared to a higher current that may be drawn when the processing unit operates in a high-performance mode. A normal operating mode may be considered as a mode in which the processing unit is operating at a clock-rate or operating frequency, which is within the rated clock-rate defined by the manufacturer. The clock-rate or operating frequency of the processing unit may refer to the frequency at which a clock generator of the processing unit generate pulses. Such pulses may be utilized for synchronizing operation of various components coupled to the processing unit, and may be used to indicate a processing speed of the processing unit. A high-performance mode, on the other hand, may be a mode wherein the processing unit may operate with a clock-rate which is greater than the rated clock-rate. Thus, while operating in the high-performance mode, the processing unit may be operating at an operating frequency which is greater than the operating frequency of the processing unit in the normal operating mode. Furthermore, while operating in the normal operating mode, the power consumed by the processing unit is less as compared to the power consumed by the processing unit while operating in high-performance mode.

In operation, a current signal corresponding to the output load current provided by the voltage regulator to the processing unit, may be monitored. The monitored current signal is proportional to the output load being provided by the voltage regulator to the processing unit. For example, the output load provided by the voltage regulator is less when the processing unit is operating in a low-powered mode, as compared to the output load when the processing unit is operating in a high-performance mode. Since the monitored current signal is proportional to the output load provided by the voltage regulator, the monitored current signal may be utilized for determining instants when processing unit switches from a normal operating mode to a high-performance mode.

In one example, a current value of the monitored current signal may be subsequently determined. The current value may then be compared with a predefined threshold value. Based on the comparison, switching of an operating mode of the processing unit may be determined. For example, if the current value being greater than the predefined threshold value, may be representative of the processing unit operating in a high-performance mode (i.e., when drawing a higher current from the voltage regulator). On determining the processing unit to be operating in a high-performance mode, the operating speed of a cooling device may be controlled to operate the cooling device at a designated speed. In an example, the designated speed may be a maximum rated speed for the cooling device. In the context of the cooling device being a cooling fan, the operating speed may be the rotational speed (i.e., the RPM) of the cooling fan.

The present approaches allow determining whether the processing unit has switched to a high-performance mode. On determining the processing unit to have switched to a high-performance mode, the cooling mechanism may be controlled to pre-emptively provide adequate heat dissipation for the processing unit operating in the high-performance mode. Owing to the pre-emptive heat dissipation, the temperatures of the processing unit may increase at a slower rate thereby enabling the processing unit to persist in the high-performance mode for greater time duration.

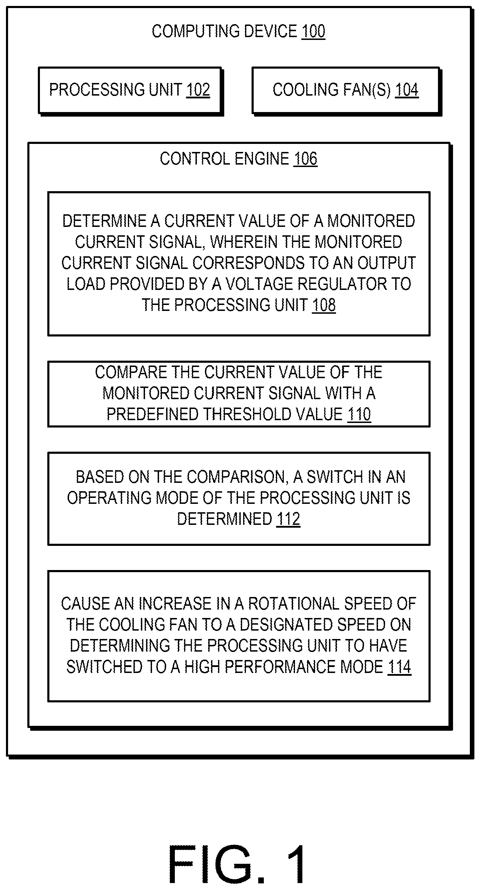

The manner in which the example computing devices are implemented are explained in detail with respect to FIGS. 1-6. While aspects of described computing device may be implemented in any number of different electronic devices, environments, and/or implementations, the examples are described in the context of the following example device(s). It may be noted that drawings of the present subject matter shown here are for illustrative purposes and are not to be construed as limiting the scope of the subject matter claimed.

FIG. 1 illustrates a computing device 100 comprising a processing unit 102 and a cooling device(s) 104. The cooling device(s) 104 is so positioned such that it may be in close proximity to the processing unit 102. Examples of computing device 100 include, but are not limited to a portable computer, laptops, mobile phones, notebooks and other type of computers.

The computing device 100 may further include a control engine 106, which may be coupled to the processing unit 102, and cooling device(s) 104. The control engine 106, amongst other functions, may control the operating speed of the cooling device(s) 104 based on the operating mode of the processing unit 102. In case the cooling device(s) 104 is a cooling fan, the control engine 106 may control the rotational speed of such a cooling fan. In an example, the control engine 106 may retrieve and execute computer-readable instructions from a memory of the computing device 100, for controlling the operating speed of the cooling device(s) 104.

During the course of operation of the computing device 100, the processing unit 102 may switch between a normal operating mode and a high-performance mode, in response to varying computational loads. In an example, the control engine 106 may determine a value of a monitored current signal (represented as block 108). The monitored current signal corresponds to an output load provided by a voltage regulator (not shown in FIG. 1) to the processing unit 102. After determining the value of the monitored current signal, the control engine 106 further compare the determined current value with a predefined threshold value (represented as block 110). The control engine 106, based on the comparison, may further determine that an operating mode of the processing unit 102 has switched to a high-performance mode (represented block 112). On determining the processing unit 102 to have switched to the high-performance mode, the control engine 106 may cause to increase operating speed of the cooling device(s) 104 to a designated speed (represented as block 114). In an example, the control engine 106 may generate control instructions based on which the operation of the cooling device(s) 104 is controlled.

As may be noted, the present approaches determine that the processing unit 102 has switched to the high-performance mode and pre-emptively control the cooling device(s) 104 such that they may operate at the designated speed. Operating the cooling device(s) 104 at the designated speed reduces the rate at which heat build-up in the processing unit 102 may occur. In an example, the designated speed may be the highest rated operating speed for the cooling device(s) 104. These and other examples are further described in detail in conjunction with the remaining figures.

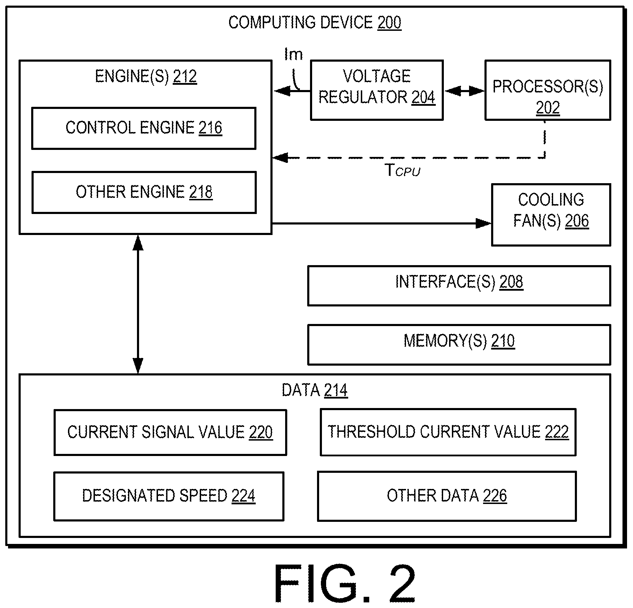

FIG. 2 illustrates a computing device 200 implementing approaches for controlling the operating speed of a cooling device based on an operating mode of the computing device 200. In an example, the computing device 200 may include a processor(s) 202, and a voltage regulator 204 which is coupled to the processor(s) 202. The voltage regulator 204 may be implemented as circuitry within the internal circuitry of the computing device 200. In an example, the voltage regulator 204 provides an input voltage for operating the processor(s) 202. The processor(s) 202 on the other hand may be a microprocessor, microcomputer, microcontroller, digital signal processor, central processing unit, state machine, logic circuitry, and/or any device that may manipulate signals based on operational instructions. The processor(s) 202 may be a single computational unit or may include multiple such computational units, without deviating from the scope of the present subject matter.

The computing device 200 further includes cooling device(s) 206. In an example, the cooling device(s) 206 may include any device which enables movement of a cooling fluid for cooling the processor(s) 202. The cooling fluid may be ambient air, or in some cases, may be a coolant liquid which may be utilized in liquid coolant systems for cooling the processor(s) 202. The cooling device(s) 206 may be positioned at locations within a housing of the computing device 200. The cooling device(s) 206 when active are to direct a flow of air for cooling the processor(s) 202. The cooling device(s) 206 may be either a single device unit or combination of device unit installed within the housing of the computing device 200. When operating, the cooling device(s) 206 may draw cool air into the computing device 200 and expel warmer air to affect cooling of the processor(s) 202. The cooling device(s) 206 may be controlled through a device controller (not shown in FIG. 2). Amongst other aspects, the cooling device controller may control the operation of the cooling device(s) 206 based on the temperature of the processor(s) 202.

The computing device 200 may further include interface(s) 208 and a memory 210. The interface(s) 208 may include a variety of software and hardware interfaces that allow the computing device 200 to interact with other networked devices such as network entities, web servers, and external repositories, and peripheral devices such as input/output (I/O) devices (not shown in FIG. 2 for sake of brevity). Examples of interface(s) 208 may include one of a I²C, PCI (Peripheral Component Interconnect) Express, and USB-C interfaces. In an example, the interface(s) 208 may also enable the communication between the processor(s) 202, the voltage regulator 204 and the cooling device(s) 206. The memory 210 may include any computer-readable medium known in the art including, for example, volatile memory, such as Static Random-Access Memory (SRAM) and Dynamic Random-Access Memory (DRAM), and/or non-volatile memory, such as Read-Only Memory (ROM), Erasable Programmable ROMs (EPROMs), flash memories, hard disks, optical disks, and magnetic tapes.

The computing device 200 may further include engine(s) 212 and data 214. The engine(s) 212 may be implemented as a combination of hardware and programming, for example, programmable instructions to implement a variety of functionalities of the engine(s) 212. In examples described herein, such combinations of hardware and programming may be implemented in several different ways. For example, when implemented as a hardware, the engine(s) 212 may be a microcontroller, embedded controller, or super I/O-based integrated circuits. The programming for the engine(s) 212 may be executable instructions. Such instructions may be stored on a non-transitory machine-readable storage medium which may be coupled either directly with the computing device 200 or indirectly (for example, through networked means). In an example, the engine(s) 212 may include a processing resource, for example, either a single processor or a combination of multiple processors, to execute such instructions. In the present examples, the non-transitory machine-readable storage medium may store instructions that, when executed by the processing resource, implement engine(s) 212. In other examples, the engine(s) 212 may be implemented as electronic circuitry.

The engine(s) 212 include a control engine 216 and other engine(s) 218. The other engine(s) 218 may further implement functionalities that supplement applications or functions performed by the computing device 200 or any of the engine(s) 212. The data 214, on the other hand, includes data that is either stored or generated as a result of functionalities implemented by any of the engine(s) 212 or the computing device 200. It may be further noted that information stored and available in the data 214 may be utilized by the engine(s) 212 for performing various functions by the computing device 200. In an example, data 214 may include current signal value 220, threshold current value 222, designated speed 224, and other data 226. It may be noted that such examples are indicative. The present approaches may be applicable to other examples without deviating from the scope of the present subject matter.

In operation, the control engine 216 may continuously monitor a current signal generated by the voltage regulator 204. As described previously, the computing device 200 may handle a variety of tasks such as emailing, and web browsing, which are less computationally intensive as compared to tasks, such as graphical processing, which are highly computationally intensive. While processing the former category of tasks, the processor(s) 202 may be considered as operating in a normal operating mode. While operating in a normal operating mode, the processor(s) 202 may operate within a clock-rate or operating frequency prescribed by its manufacturer. However, in instances where the computing device 200 is processing tasks which are computationally intensive, the operating frequency or the clock-rate of the processor(s) 202 may be increased for enhancing the computational capability of the processor(s) 202, in which case the processor(s) 202 may be considered as operating in a high-performance mode. Depending on which mode the processor(s) 202 operates in, the voltage regulator 204 may accordingly provide an output load for driving the processor(s) 202. Therefore, the output load of the voltage regulator 204 may be indicative of the mode in which the processor(s) 202 is operating in.

In an example, the control engine 216 may determine an estimated computational load due to execution of programmable tasks by the processor(s) 202. Based on the estimated computational load, the control engine 216 may cause the processor(s) 202 to be switched to the high-performance mode. In an example, the control engine 216 may estimate the computational load based on a variety of factors. Examples of such factors include, but are not limited to, number of tasks in a processing queue of the processor(s) 202, type of application requesting processing resource, and number of applications. If the computational load on the processor(s) 202 is greater than a threshold load, the processor(s) 202 may switch to a high-performance mode. During the high-performance mode, the processor(s) 202 draws a higher output load from the voltage regulator 204 and operates at a higher clock-rate or operational frequency as compared to the clock-rate when operating in a normal operating mode.

In operation, the control engine 216 may monitor a current signal (represented as *Iₘ*) generated by the voltage regulator 204. The monitored current signal corresponds to an output current provided by the voltage regulator 204 to the processor(s) 202. In another example, the measure valued of the monitored current signal *Iₘ* is proportional to the output load provided by the voltage regulator 204 to the processor(s) 202. The measured signal value may be stored as current signal value 220 (referred to as current value 220). As described previously, the current value 220 is dependent on the output load of the voltage regulator 204. Therefore, any change in the current value 220 may indicate that the operating mode of the processor(s) 202 has switched.

In an example, the control engine 216 may compare the measure of the current signal, i.e., *Iₘ,* with the threshold current value 222 (referred to as threshold value 222) to determine whether the processor(s) 202 has switched to a high-performance mode or not. The threshold value 222 may be considered as a minimum output load, generated by the voltage regulator, for operating the processor(s) 202 in the high-performance mode. Thus, the current value 220 being less than the threshold value 222 may indicate that the output load of the voltage regulator 204 is within a performant output load, and that the processor(s) 202 is operating in a normal operating mode. It may be noted that, on determining processor(s) 202 being operating in normal operating mode, control engine(s) 216 directly or indirectly vary cooling device(s) 206 speed based on the temperature (T_{CPU}) of the processor(s) 202 (as indicated by the dotted line in FIG. 2).

On the other hand, the current value 220 greater than the threshold value 222 may result in response to the voltage regulator 204 providing a higher output load for the processor(s) 202. This may occur when the processor(s) 202 may have switched to the high-performance mode, for example, to process computationally intensive tasks. In such cases, the control engine 216 on determining the current value 220 to be greater than the threshold value 222, may determine that the processor(s) 202 may have switched to the high-performance mode. In such cases, the value of the current value 220 may increase from a first value to a second value, in response to the processor(s) 202 switching to the high-performance mode.

As described previously, as the processor(s) 202 is switched to the high-performance mode from the normal operating mode, the power consumption of the processor(s) 202 may also increase and may eventually increase the heat generated by the processor(s) 202. While operating in the normal operating mode, the cooling device(s) 206 of the computing device 200 may be operating at a device speed corresponding to normal operating mode. During normal operating mode, the device speed may be determined based on the temperature changes of the processor(s) 202. In an example, the memory(s) 210 may store a look up table which includes various temperature ranges in which the processor(s) 202 may operate, and the corresponding operating speeds for the cooling device(s) 206. Based on the temperature of the processor(s) 202, an operating speed from the look up table may be selected, and accordingly the speed of the cooling device(s) 206 may be set. Such a mode may be referred to as a normal device speed mode. However, on determining that the processor(s) 202 has switched to the high-performance mode, the control engine 216 may change the operating speed of the cooling device(s) 206. In an example, on ascertaining the processor(s) 202 to have switched to the high-performance mode, the control engine 216 may generate control instructions to change the operating speed of the cooling device(s) 206. The control engine 216 may retrieve the designated speed 224 from data 214 corresponding to the high-performance mode.

Once the designated speed 224 is retrieved, in an example, the control engine 216 may generate control signal to override the device controller and the cooling device(s) 206 operating in the normal device speed mode. Once the device controller is overridden, the control engine 216 may generate control instructions to operate the cooling device(s) 206 at the designated speed 224. In an example, the designated speed 224 is the maximum operating speed prescribed for the cooling device(s) 206. The designated speed 224 may either be a single specific value, a plurality of specific values, or may be a range between a lower first value and the maximum rated operating speed of the cooling device(s) 206.

With the cooling device(s) 206 now operating at the designated speed 224, the control engine 216 may monitor the processor(s) 202 to determine the time duration for which the high-performance mode of the processor(s) 202 persists. Accordingly, the control engine 216 maintains the operating speed of the cooling device(s) 206 at the designated speed 224 for such durations. For example, the control engine 216 may monitor the current value 220 to determine whether it decreases and has a value which is less than the threshold value 222. On determining the current value 220 to have dropped below the threshold value 222, the control engine 216 may reduce the operating speed to the prescribed operating speed. Thereafter, the control engine 216 may pass the control of the cooling device(s) 206 back to the device controller. In an example, the prescribed operating speed may be stored in other data 226.

The threshold value 222 and the designated speed 224 may be defined based on a thermal profile of the computing device 200. For example, computing device 200 having a larger form factor (e.g., desktop PCs, or standalone workstations) may be fitted with larger cooling device(s) 206, as compared to computing device 200 having smaller form factor (e.g., laptops, or tablets) which may have a smaller cooling device(s) 206. In the former case, the designated speed 224 may be less (owing to the larger size of the cooling device(s) 206) as compared to the designated speed 224 for the latter types of computing device 200. It may be noted that the manner in which such a designated speed 224 is determined may be dependent on a number of factors. Such examples may also fall within the scope of the present subject matter.

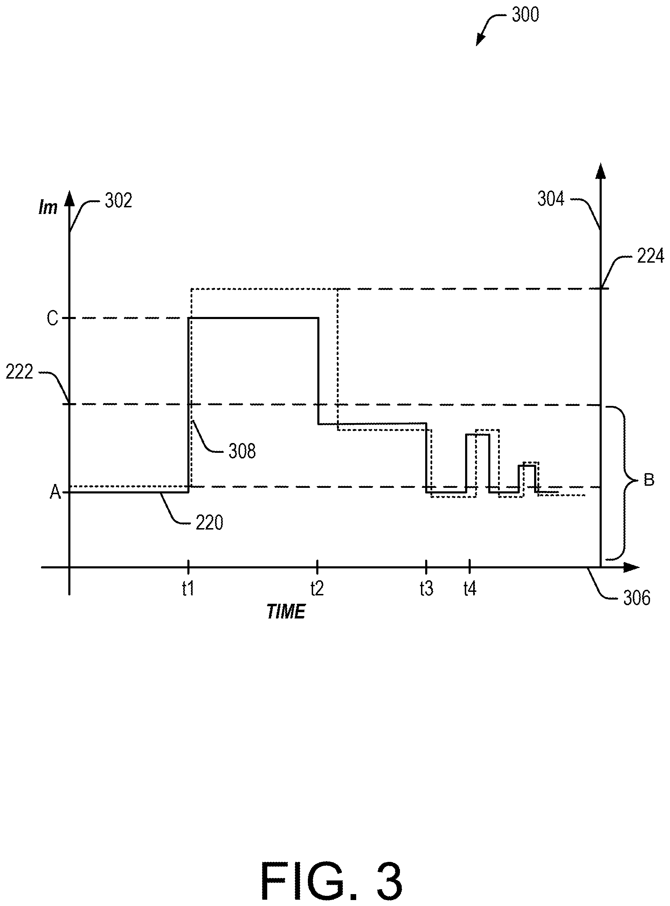

The above-described approaches are further explained through graph 300 shown in FIG. 3. The present graph depicts the variation of the current value 220 and the operating speed of the cooling device(s) 206 in response to determining whether the computing device 200 has switched to a high-performance mode. In an example, the graph 300 includes a first vertical axis 302 and a second vertical axis 304. The first vertical axis 302 represents the measure of the monitored current signal, i.e., current value 220. On the other hand, the second vertical axis 304 depicts the operating speed of the cooling device(s) 206 of the computing device 200. Each of the current value 220 and the operating speed are indicated as varying with time (represented by the horizontal axis 306).

The graph 300 further depicts the current value 220 which is initially at a value 'A', wherein 'A' is the current value 220 of the monitored current signal generated by the voltage regulator 204 while the processor(s) 202 is functioning in the normal operating mode. At this stage, the cooling device(s) 206 of the computing device 200 may be operating at an operating speed within a range depicted as 'B' on the axis 304. During the course of operating the computing device 200, at time instant *'t1'* it is possible that the computational load of the processor(s) 202 may increase owing to which the processor(s) 202 switches to the high-performance mode. At this stage, the output load drawn from the voltage regulator 204 by the processor(s) 202 increases. Since the monitored current signal is proportional to the output load of the voltage regulator 204, the current value 220 also increases to the value depicted as 'C'. The control engine 216 may at this stage on ascertaining the current value 220 to be greater than the threshold value 222 (also indicated along the first vertical axis 302) determine that the processor(s) 202 has switched to the high-performance mode.

On determining that the processor(s) 202 has switched to the high-performance mode, the control engine 216 may increase the operating speed of the cooling device(s) 206 from 'B' to the designated speed 224 (as indicated along the second vertical axis 304). As may be observed that the increase in the operating speed of the cooling device(s) 206 is responsive to the processor(s) 202 switching to the high-performance mode. The cooling device(s) 206 may continue to the operate at the designated speed 224 for the duration the processor(s) 202 persists in the high-performance mode (as indicated by the current value 220 which persists at the value 'C' till about time instant *t2*). At *t2,* the processor(s) 202 may switch back from the high-performance mode to a lower operating mode. Consequently, the current value 220 also decreases (at about time instant t2). Over the course of time between t2 and t3, the value of the current value 220 decreases till the current value 220 is at the value 'A', indicative of the processor(s) 202 operating in the normal operating mode. At t4, the computation load on the processor(s) 202 may vary, thereby resulting variations in the operating speed of the cooling device(s) 206 within the range 'B', and based on the temperature of the processor(s) 202.

The graph 300 depicts increasing the operating speed of the cooling device(s) 206 to the designated speed 224, on the processor(s) 202 switching to a high-performance mode. It is pertinent to note that the increase in the operating speed of the cooling device(s) 206 is performed in response to the processor(s) 202 switching to the high-performance mode, rather than in response to temperature of the processor(s) 202 increasing beyond a predefined temperature threshold. The pre-emptive increase of operating speed of the cooling device(s) 206 provides a greater flow of air over the processor(s) 202 thereby reducing the rate at which the temperature of the processor(s) 202 increases, during the high-performance mode. As a result, the consequent thermal impact is reduced which enables the processor(s) 202 to persist in the high-performance mode for a longer duration of time.

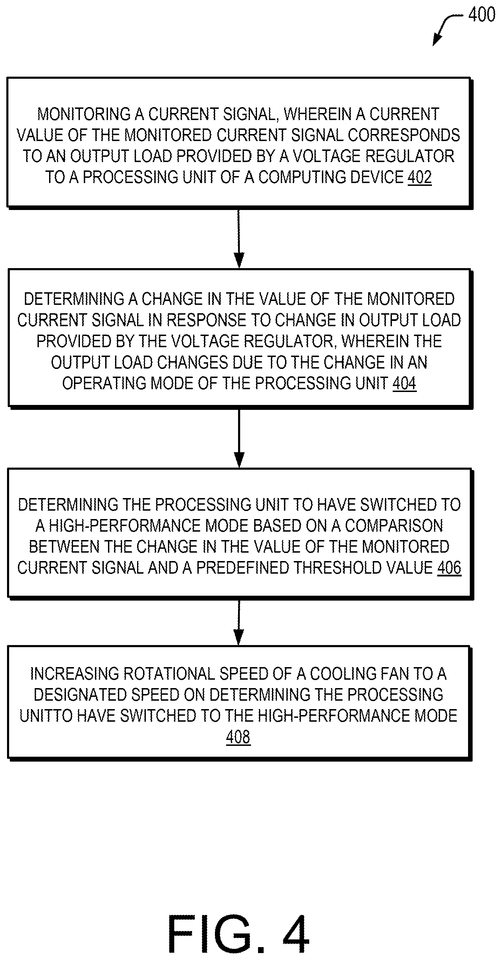

FIG. 4 illustrates a method 400 for controlling operating speed of a cooling device, as per an example. Although the method 400 may be implemented in a variety of computing devices, for the ease of explanation, the present description of the example method 400 is provided in reference to the above-described computing device 100 and 200 (collectively referred to as devices 100,200).

The order in which the method 400 is described is not intended to be construed as a limitation, and any number of the described method blocks may combine in any order to implement the method 400, or an alternative method. It may be understood that the blocks of the method 400 may be performed by any one of the devices 100,200. The blocks of the method 400 may be executed based on instructions stored in a non-transitory computer-readable medium, as will be readily understood. The non-transitory computer-readable medium may include, for example, digital memories, magnetic storage media, such as magnetic disks and magnetic tapes, hard drives, or optically readable digital data storage media.

At block 402, a current signal which corresponds to an output load provided by a voltage regulator to a processing unit of a computing device may be monitored. For example, the control engine 216 may monitor the current signal generated by the voltage regulator 204. The current signal corresponds and is proportional to the output load provided by the voltage regulator 204 to the processor(s) 202. The value of the monitored current signal may be stored in the computing device 200 as current value 220.

At block 404, a change in the value of the monitored current signal 216 is determined. For example, the control engine 216 may determine whether the current value 220 has changed. It may be noted that the current value 220 may change in response to an increase in the output load provided by the voltage regulator 204 to the processor(s) 202. Such an increase in the output load may occur when the processor(s) 202 operates at a higher operating frequency or a higher clock-rate, for handling high computational loads.

At block 406, switching of the processor to a high-performance mode is ascertained based on a comparison between the change in the current value and a predefined threshold. For example, the control engine 216 may compare the change in the current value 220 generated by the voltage regulator 204, with a predefined threshold value, such as the threshold value 222. In an example, the threshold value 222 may be utilized as the basis for determining whether the processor(s) 202 has switched to the high-performance mode. On determining the change in the current value 220 to be greater than the threshold value 222, the control engine 216 may ascertain that the processor(s) 202 has switched to the high-performance mode.

At block 408, operating speed of a cooling device of the computing device may be increased to a designated speed. For example, on ascertaining the processor(s) 202 to be operating in the high-performance mode, the control engine 216 may increase the operating speed of the cooling device(s) 206 to a designated speed, such as the designated speed 224. In one example, the designated speed is a maximum rated operating speed of the cooling device(s) 206. In another example, the control engine 216 may maintain the cooling device(s) 206 to operate at the maximum speed for a duration in which the processing unit may ideally operate in the high-performance mode.

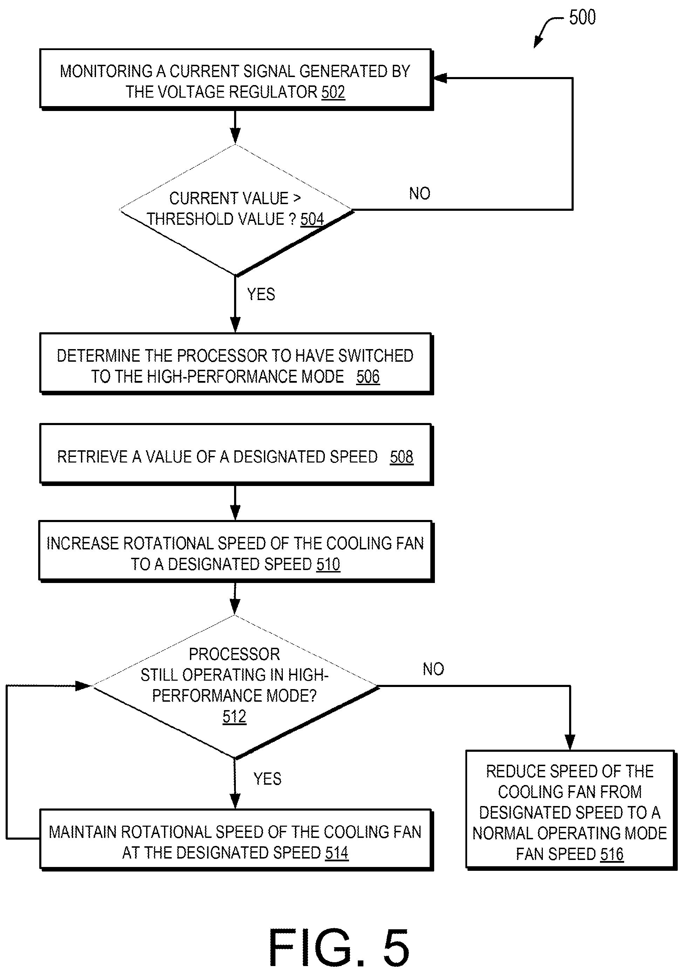

FIG. 5 illustrates a method 500 for controlling operating speed of a cooling device, as per an example. At block 502, a current signal generated by the voltage regulator is monitored. The voltage regulator is coupled with the processing unit, to which it provides an output load. In an example, the control engine 216 may monitor the current signal thus generated by the voltage regulator 204. The current signal (represented as *Iₘ* in FIG. 2) is proportional to the output load provided by the voltage regulator 204 to the processor(s) 202. Therefore, a higher current signal would result in instances wherein the output load provided by the voltage regulator 204 is high (e.g., when the processor(s) 202 switches to a high-performance mode). Similarly, the current signal may be within an operating range when the processor(s) 202 is operating in a normal operating mode.

At block 504, a value of the current signal may be compared to a threshold value. For example, the control engine 216 may compare the measure of the current signal (which is stored as current value 220) with the threshold value 222. Since the current value 220 is proportional to the output load provided by the voltage regulator 204, the current value 220 may be utilized to determine whether the processor(s) 202 has switched to the high-performance mode. For example, the current value 220 being less than the threshold value 222 ('No' path from block 504) may indicate that the output load of the voltage regulator 204 is within a performant output load. This may correspond to the processor(s) 202 operating in the normal operating mode. On determining the processor(s) 202 to be operating in a normal operating mode (block 506), the method may continue to monitor the current signal and the corresponding current value 220 (as indicated in block 502).

In a similar manner, the current value 220 being greater than the threshold value 222 ('Yes' path from block 504) may indicate that the output load of the voltage regulator 204 is greater than the performant output load of the voltage regulator 204. Thus, based on the comparison, it may be determined that the processor(s) 202 may have switched to the high-performance mode.

At block 508, a designated speed for the processor may be retrieved. For example, on determining the processor(s) 202 to have switched to the high-performance mode, the control engine 216 may retrieve a value of a designated speed 224 (block 508). The designated speed 224 may be a specific value of an operating speed for the cooling device(s) 206. In an example, the designated speed 224 may be single specific value or may be a plurality of discrete values between a first operating speed and a second operating speed. The value of the designated speed is greater than the operating speed at which the cooling device(s) 206 may function while the processor(s) 202 is operating in the normal operating mode. In another example, the designated speed may be a maximum rated operating speed specified by manufacturers of the cooling device(s) 206.

At block 510, the operating speed of the cooling device(s) 206 may be increased to the designated speed. In an example, the control engine 216 may generate one or more control instructions for controlling the cooling device(s) 206. In response to the control instructions, the operating speed of the cooling device(s) 206 may be increased to the designated speed 224.

At block 512, a further determination may be made to assess whether the processor is still operating in the high-performance mode. On determining that the processor(s) 202 is still operating in the high-performance mode ('Yes' path from block 512), the control engine 216 may maintain the operating speed of the cooling device(s) 206 at the designated speed 224 (block 514). In an example, the control engine 216 may periodically and continuously monitor the processor(s) 202 to assess whether it is still operating in the high-performance mode (as depicted by block 512).

However, on determining that the processor(s) 202 is no longer operating in the high-performance mode ('No' path from block 512), the computing device 200 may reduce the speed of the cooling device(s) 206 from the designated speed 224 to a device speed corresponding to the normal operating mode (block 516). In an example, the reduced speed i.e. the normal operating mode device speed may be determined based on the temperature of the processor(s) 202 using look up table stored in the memory(s) 210.

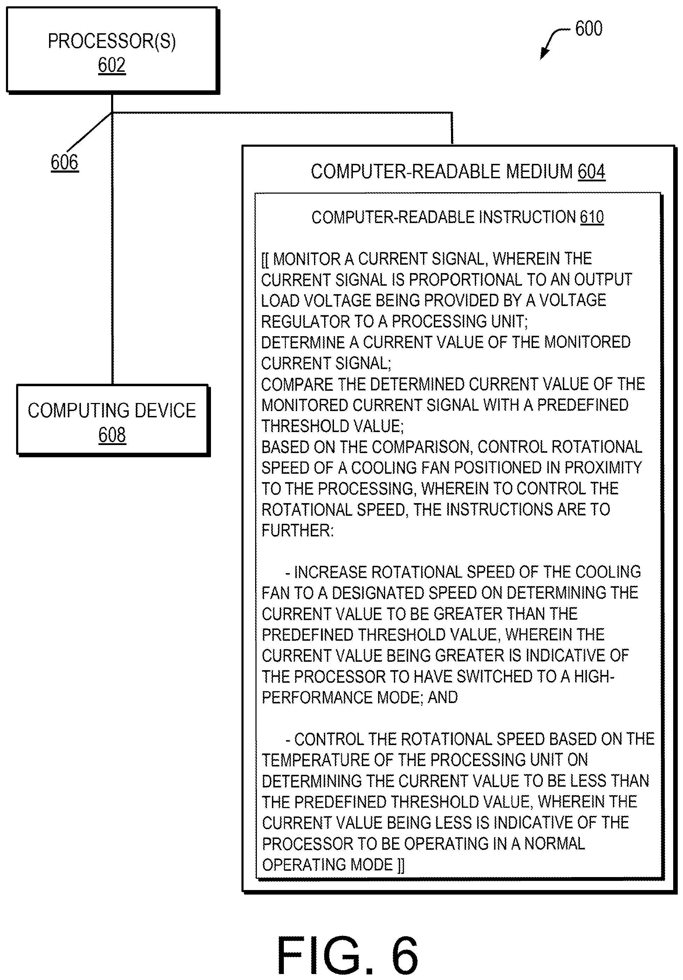

FIG. 6 illustrates a computing environment 600 implementing a non-transitory computer readable medium for controlling operating speed of the cooling devices based on the operating mode of the processing unit of the computing device. In an example, the computing environment 600 includes processor(s) 602 communicatively coupled to a non-transitory computer readable medium 604 through communication link 606. In an example, the computing environment 600 may be for controlling the operating speed of the cooling device(s) 206 of the computing device 200, as depicted in FIG. 2. In an example, the processor(s) 602 may have one or more processing resources for fetching and executing computer-readable instructions from the non-transitory computer readable medium 604. The processor(s) 602 and the non-transitory computer readable medium 604 may be implemented, for example, in devices 100 or 200.

The non-transitory computer readable medium 604 may be, for example, an internal memory device or an external memory. In an example implementation, the communication link 606 may be a network communication link, or other communication links, such as a PCI (Peripheral component interconnect) Express, USB-C interfaces, I²C interfaces, etc. The processor(s) 602 and the non-transitory computer readable medium 604 may also be communicatively coupled to a computing device 608 over the network. The computing device 608 may be implemented, for example, as computing device 100 or computing device 200. In an example implementation, the non-transitory computer readable medium 604 includes a set of computer readable instructions 610 which may be accessed by the processor(s) 602 through the communication link 606 and subsequently executed to perform acts for feature-based reporting of software versions.

Referring to FIG. 6, in an example, the non-transitory computer readable medium 604 includes computer readable instructions 610 that cause the processor(s) 602 to control the operating speed of the cooling device of the computing device, such as the computing device 200, based on operating mode of its processing unit. In an example, the instructions 610 when executed may cause monitoring of a current signal. Such a current signal is generated by the voltage regulator, and is proportional to an output load being provided by a voltage regulator to a processing unit. In an example, the control engine 216 may monitor a current signal (represented as *Iₘ*) which corresponds to an output current provided by the voltage regulator 204 to a processor, such as the processor(s) 602 (or processor(s) 202). Thereafter, a current value (represented as current value 220) may be obtained.

Once obtained, the instructions 610 may further execute to cause a comparison of the current value 220 and a threshold value 222 (e.g., by the control engine 216). Based on the comparison, the instructions 610 may control the operating speed of the cooling device(s) 206. In an example, the instructions 610 may increase the operating speed of the cooling device(s) 206 to a designated speed, i.e., the designated speed 224. The increase to the designated speed 224 is performed in cases where the current value 220 is greater than threshold value 222, which in turn occurs when the output load voltage generated by the voltage regulator 204 is high and is indicative of the processor(s) 602 switching to the high-performance mode. On the other hand, if the current value 220 is less than the threshold value 222 (indicative of the processor(s) 602 operating in normal operating mode), the instructions 610, when executed, control the operating speed of the cooling device(s) 206 based on temperature of the processor(s) 602.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

## Claims

1. A computing device (100, 200, 608) comprising:
a processing unit (102);
a cooling device positioned in proximity to the processing unit (102);
a control engine (106, 216), coupled to the cooling device, wherein the control engine (106, 216) is to:
determine a current value of a monitored current signal, wherein the monitored current signal corresponds to an output load provided to the processing unit (102);
compare the current value of the monitored current signal with a predefined threshold value;
based on the comparison, determine whether an operating mode of the processing unit (102) has switched; and
cause an increase in an operating speed of the cooling device to a designated speed on determining the processing unit (102) to have switched to a high-performance mode.

2. The computing device (100, 200, 608) as claimed in claim 1, further comprising a voltage regulator (204) to:
provide the output load to the processing unit (102) as per the operating mode of the processing unit (102); and
generate the monitored current signal for monitoring in response to providing the output load, wherein the monitored current signal is proportional to the value of the output load provided to the processing unit (102).

3. The computing device (100, 200, 608) as claimed in claim 1, wherein the monitored current signal increases from a first value to a second value in response to the switching of the processing unit (102) to the high-performance mode.

4. The computing device (100, 200, 608) as claimed in claim 1, wherein the processing unit (102) is to switch from a normal operating mode to the high-performance mode, with the output load provided during the normal operating mode being less than the output load provided during the high-performance mode.

5. The computing device (100, 200, 608) as claimed in claim 1, wherein the predefined threshold value corresponds to a minimum output load for operating in the high-performance mode, generated by the voltage regulator (204) to provide to the processing unit (102).

6. The computing device (100, 200, 608) as claimed in claim 1, wherein the control engine (106, 216) on ascertaining the processing unit (102) to have switched to the high-performance mode is to further:
generate a control signal to override a device controller controlling the cooling device; and
control the operating speed of the cooling device in place of the device controller.

7. The computing device (100, 200, 608) as claimed in claim 1, wherein the control engine (106, 216) is further to maintain the cooling device to operate at the designated speed for a duration in which the processing unit (102) is operating in the high-performance mode.

8. The computing device (100, 200, 608) as claimed in claim 1, wherein the designated speed is within a range between a first operating speed and a second operating speed of the cooling device.

9. A method comprising:
monitoring a current signal, wherein a value of the monitored current signal corresponds to an output load provided by a voltage regulator (204) to a processing unit (102) of a computing device (100, 200, 608);
determining a change in the current value of the monitored current signal in response to change in output load provided by the voltage regulator (204), wherein the change in the output load occurs due to a change in an operating mode of the processing unit (102);
determining the processing unit (102) to have switched to a high-performance mode based on a comparison between the change in the current value of the monitored current signal and a predefined threshold value; and
increasing operating speed of a cooling device positioned in the proximity of the processing unit (102) to a designated speed on determining the processing unit (102) to have switched to the high-performance mode.

10. The method as claimed in claim 9, further comprising:
determining a computational load due to the execution of a programmable tasks on the processing unit (102); and
in response to the computational load being greater than predefined workload, increasing output load provided by the voltage regulator (204) to switch the processing unit (102) to the high-performance mode.

11. The method as claimed in claim 9, wherein the current value of the monitored current signal is proportional to the output load provided by the voltage regulator (204) to the processing unit (102).

12. The method as claimed in claim 9, wherein the designated speed is within a range between a first operating speed and a higher second operating speed of the cooling device.

13. A non-transitory computer-readable medium comprising computer readable instructions, which when executed by a processing unit (102), causes a control engine (106, 216) within a computing device (100, 200, 608) to:
monitor a current signal, wherein the current signal is proportional to an output load being provided by a voltage regulator (204) to the processing unit (102);
determine a current value of the monitored current signal;
compare the determined current value of the monitored current signal with a predefined threshold value;
based on the comparison, control operating speed of a cooling device positioned in proximity to the processing unit, wherein to control the operating speed, the instructions are to further:
increase operating speed of the cooling device to a designated speed on determining the current value to be greater than the predefined threshold value, wherein the current value being greater is indicative of the processing unit to have switched to a high-performance mode; and
control operating speed based on temperature of the processing unit (102) on determining the current value to be less than the predefined threshold value, wherein the determined current value being less is indicative of the processing unit to be operating in a normal operating mode.

14. The non-transitory computer-readable medium as claimed in claim 13, wherein the instructions are to further maintain the cooling device to operate at the designated speed for a duration during which the processing unit (102) is operating in the high-performance mode.

15. The non-transitory computer-readable medium as claimed in claim 13, wherein the processing unit (102) operating in the normal operating mode is operating at a clock frequency which is less than the clock frequency of the processing unit (102) operating in the high-performance mode.

## Patentansprüche

1. Rechenvorrichtung (100; 200; 608), die umfasst:
eine Verarbeitungseinheit (102);
eine in der Nähe der Verarbeitungseinheit (102) angeordnete Kühlvorrichtung;
eine Steuermaschine (106, 216), gekoppelt an die Kühlvorrichtung, wobei die Steuermaschine (106, 216) dazu dient:
einen aktuellen Wert eines überwachten Stromsignals zu bestimmen, wobei das überwachte Stromsignal einer Ausgangslast entspricht, die der Verarbeitungseinheit (102) bereitgestellt wird;
den aktuellen Wert des überwachten Stromsignals mit einem vorgegebenen Schwellenwert zu vergleichen;
basierend auf dem Vergleich zu bestimmen, ob ein Betriebsmodus der Verarbeitungseinheit (102) gewechselt hat; und
einen Anstieg einer Betriebsgeschwindigkeit der Kühlvorrichtung auf eine festgelegte Geschwindigkeit bei Bestimmen, dass die Verarbeitungseinheit (102) in einen Hochleistungsmodus gewechselt hat, zu veranlassen.

2. Rechenvorrichtung (100, 200, 608) nach Anspruch 1, die ferner einen Spannungsregler (204) umfasst, um:
die Ausgangslast an die Verarbeitungseinheit (102) gemäß dem Betriebsmodus der Verarbeitungseinheit (102) bereitzustellen; und
das überwachte Stromsignal zur Überwachung als Reaktion auf das Bereitstellen der Ausgangslast zu erzeugen, wobei das überwachte Stromsignal proportional zu dem Wert der Ausgangslast ist, die der Verarbeitungseinheit (102) bereitgestellt wird.

3. Rechenvorrichtung (100, 200, 608) nach Anspruch 1, wobei das überwachte Stromsignal als Reaktion auf das Umschalten der Verarbeitungseinheit (102) in den Hochleistungsmodus von einem ersten Wert auf einen zweiten Wert ansteigt.

4. Rechenvorrichtung (100, 200, 608) nach Anspruch 1, wobei die Verarbeitungseinheit (102) dazu dient, von einem normalen Betriebsmodus in den Hochleistungsmodus umzuschalten, wobei die während des normalen Betriebsmodus bereitgestellte Ausgangslast geringer ist als die während des Hochleistungsmodus bereitgestellte Ausgangslast.

5. Rechenvorrichtung (100, 200, 608) nach Anspruch 1, wobei der vorgegebene Schwellenwert einer Mindestausgangslast für den Betrieb im Hochleistungsmodus entspricht, die von dem Spannungsregler (204) erzeugt wird, um der Verarbeitungseinheit (102) bereitgestellt zu werden.

6. Rechenvorrichtung (100, 200, 608) nach Anspruch 1, wobei die Steuermaschine (106, 216) beim Feststellen, dass die Verarbeitungseinheit (102) in den Hochleistungsmodus gewechselt hat, ferner dazu dient:
ein Steuersignal zu erzeugen, um eine Vorrichtungssteuerung zu übersteuern, die die Kühlvorrichtung steuert; und
die Betriebsgeschwindigkeit der Kühlvorrichtung anstelle der Vorrichtungssteuerung zu steuern.

7. Rechenvorrichtung (100, 200, 608) nach Anspruch 1, wobei die Steuermaschine (106, 216) ferner dazu dient, den Betrieb der Kühlvorrichtung bei der festgelegten Geschwindigkeit für eine Dauer, in der die Verarbeitungseinheit (102) im Hochleistungsmodus arbeitet, aufrechtzuerhalten.

8. Rechenvorrichtung (100, 200, 608) nach Anspruch 1, wobei die festgelegte Geschwindigkeit in einem Bereich zwischen einer ersten Betriebsgeschwindigkeit und einer zweiten Betriebsgeschwindigkeit der Kühlvorrichtung liegt.

9. Verfahren, das umfasst:
Überwachen eines Stromsignals, wobei ein Wert des überwachten Stromsignals einer Ausgangslast entspricht, die von einem Spannungsregler (204) an eine Verarbeitungseinheit (102) einer Rechenvorrichtung (100, 200, 608) bereitgestellt wird;
Bestimmen einer Änderung des aktuellen Werts des überwachten Stromsignals als Reaktion auf eine Änderung der Ausgangslast, bereitgestellt durch den Spannungsregler (204), wobei die Änderung der Ausgangslast aufgrund einer Änderung eines Betriebsmodus der Verarbeitungseinheit (102) auftritt;
Bestimmen, dass die Verarbeitungseinheit (102) in einen Hochleistungsmodus basierend auf einem Vergleich zwischen der Änderung des aktuellen Werts des überwachten Stromsignals und einem vorgegebenen Schwellenwert gewechselt ist; und
Erhöhen der Betriebsgeschwindigkeit einer in der Nähe der Verarbeitungseinheit (102) angeordneten Kühlvorrichtung auf eine festgelegte Geschwindigkeit bei Bestimmen, dass die Verarbeitungseinheit (102) in den Hochleistungsmodus umgeschaltet hat.

10. Verfahren nach Anspruch 9, das ferner umfasst:
Bestimmen einer Rechenlast aufgrund der Ausführung einer programmierbaren Aufgabe auf der Verarbeitungseinheit (102); und
als Reaktion darauf, dass die Rechenlast größer als die vorgegebene Arbeitslast ist, Erhöhen der durch den Spannungsregler (204) bereitgestellten Ausgangslast, um die Verarbeitungseinheit (102) in den Hochleistungsmodus umzuschalten.

11. Verfahren nach Anspruch 9, wobei der aktuelle Wert des überwachten Stromsignals proportional zu der Ausgangslast ist, die von dem Spannungsregler (204) an die Verarbeitungseinheit (102) bereitgestellt wird.

12. Verfahren nach Anspruch 9, wobei die festgelegte Geschwindigkeit in einem Bereich zwischen einer ersten Betriebsgeschwindigkeit und einer höheren zweiten Betriebsgeschwindigkeit der Kühlvorrichtung liegt.

13. Nichtflüchtiges computerlesbares Medium, das computerlesbare Anweisungen umfasst, die bei Ausführung durch eine Verarbeitungseinheit (102) eine Steuermaschine (106, 216) innerhalb einer Rechenvorrichtung (100, 200, 608) veranlassen zum:
Überwachen eines Stromsignals, wobei das Stromsignal proportional zu einer Ausgangslast ist, die durch einen Spannungsregler (204) an die Verarbeitungseinheit (102) bereitgestellt wird;
Bestimmen eines aktuellen Werts des überwachten Stromsignals;
Vergleichen des bestimmten aktuellen Werts des überwachten Stromsignals mit einem vorgegebenen Schwellenwert;
auf der Basis von dem Vergleich, Steuern der Betriebsgeschwindigkeit einer in der Nähe der Verarbeitungseinheit angeordneten Kühlvorrichtung, wobei zum Steuern der Betriebsgeschwindigkeit die Anweisungen ferner lauten:
Erhöhen der Betriebsgeschwindigkeit der Kühlvorrichtung auf eine festgelegte Geschwindigkeit bei Bestimmen, dass der aktuelle Wert größer als der vorgegebene Schwellenwert ist, wobei der Umstand, dass der aktuelle Wert größer ist, anzeigt, dass die Verarbeitungseinheit in einen Hochleistungsmodus gewechselt hat; und
Steuern der Betriebsgeschwindigkeit basierend auf der Temperatur der Verarbeitungseinheit (102) beim Bestimmen, dass der aktuelle Wert kleiner als der vorgegebene Schwellenwert ist, wobei der bestimmte aktuelle Wert, der kleiner ist, anzeigt, dass die Verarbeitungseinheit in einem normalen Betriebsmodus arbeitet.

14. Nichtflüchtiges computerlesbares Medium nach Anspruch 13, wobei die Anweisungen ferner dazu dienen, den Betrieb der Kühlvorrichtung bei der festgelegten Geschwindigkeit für eine Dauer, in der die Verarbeitungseinheit (102) im Hochleistungsmodus arbeitet, aufrechtzuerhalten.

15. Nichtflüchtiges computerlesbares Medium nach Anspruch 13, wobei die im normalen Betriebsmodus arbeitende Verarbeitungseinheit (102) mit einer Taktfrequenz arbeitet, die geringer ist als die Taktfrequenz der im Hochleistungsmodus arbeitenden Verarbeitungseinheit (102).

## Revendications

1. Dispositif informatique (100, 200, 608) comprenant :
une unité de traitement (102) ;
un dispositif de refroidissement positionné à proximité de l'unité de traitement (102) ;
un moteur de commande (106, 216), couplé au dispositif de refroidissement, dans lequel le moteur de commande (106, 216) doit :
déterminer une valeur de courant d'un signal de courant surveillé, dans lequel le signal de courant surveillé correspond à une charge de sortie fournie à l'unité de traitement (102) ;
comparer la valeur de courant du signal de courant surveillé avec une valeur seuil prédéfinie ;
sur la base de la comparaison, déterminer si un mode de fonctionnement de l'unité de traitement (102) a commuté ; et
amener une augmentation d'une vitesse de fonctionnement du dispositif de refroidissement à une vitesse désignée lors de la détermination du fait que l'unité de traitement (102) a commuté vers un mode haute performance.

2. Dispositif informatique (100, 200, 608) selon la revendication 1, comprenant en outre un régulateur de tension (204) destiné à :
fournir la charge de sortie à l'unité de traitement (102) conformément au mode de fonctionnement de l'unité de traitement (102) ; et
générer le signal de courant surveillé pour surveillance en réponse à la fourniture de la charge de sortie, dans lequel le signal de courant surveillé est proportionnel à la valeur de la charge de sortie fournie à l'unité de traitement (102).

3. Dispositif informatique (100, 200, 608) selon la revendication 1, dans lequel le signal de courant surveillé augmente d'une première valeur à une seconde valeur en réponse à la commutation de l'unité de traitement (102) vers le mode haute performance.

4. Dispositif informatique (100, 200, 608) selon la revendication 1, dans lequel l'unité de traitement (102) doit commuter d'un mode de fonctionnement normal vers le mode haute performance, la charge de sortie fournie pendant le mode de fonctionnement normal étant inférieure à la charge de sortie fournie pendant le mode haute performance.

5. Dispositif informatique (100, 200, 608) selon la revendication 1, dans lequel la valeur seuil prédéfinie correspond à une charge de sortie minimale pour le fonctionnement dans le mode haute performance, générée par le régulateur de tension (204) à fournir à l'unité de traitement (102).

6. Dispositif informatique (100, 200, 608) selon la revendication 1, dans lequel le moteur de commande (106, 216), après s'être assuré que l'unité de traitement (102) a commuté vers le mode haute performance, doit en outre :
générer un signal de commande pour passer outre un dispositif de commande de dispositif commandant le dispositif de refroidissement ; et
commander la vitesse de fonctionnement du dispositif de refroidissement à la place du dispositif de commande de dispositif.

7. Dispositif informatique (100, 200, 608) selon la revendication 1, dans lequel le moteur de commande (106, 216) doit en outre maintenir le dispositif de refroidissement pour qu'il fonctionne à la vitesse désignée pendant une durée pendant laquelle l'unité de traitement (102) fonctionne dans le mode haute performance.

8. Dispositif informatique (100, 200, 608) selon la revendication 1, dans lequel la vitesse désignée est comprise dans une plage entre une première vitesse de fonctionnement et une seconde vitesse de fonctionnement du dispositif de refroidissement.

9. Procédé comprenant :
la surveillance d'un signal de courant, dans lequel une valeur du signal de courant surveillé correspond à une charge de sortie fournie par un régulateur de tension (204) à une unité de traitement (102) d'un dispositif informatique (100, 200, 608) ;
la détermination d'un changement dans la valeur de courant du signal de courant surveillé en réponse à un changement dans une charge de sortie fournie par le régulateur de tension (204), dans lequel le changement dans la charge de sortie se produit en raison d'un changement dans un mode de fonctionnement de l'unité de traitement (102) ;
le fait de déterminer que l'unité de traitement (102) a commuté vers un mode haute performance sur la base d'une comparaison entre le changement dans la valeur de courant du signal de courant surveillé et une valeur seuil prédéfinie ; et
l'augmentation de la vitesse de fonctionnement d'un dispositif de refroidissement positionné à proximité de l'unité de traitement (102) à une vitesse désignée lors de
la détermination du fait que l'unité de traitement (102) a commuté vers le mode haute performance.

10. Procédé selon la revendication 9, comprenant en outre :
la détermination d'une charge de calcul due à l'exécution de tâches programmable sur l'unité de traitement (102) ; et
en réponse à la charge de calcul étant supérieure à une charge de travail prédéfinie, l'augmentation de la charge de sortie fournie par le régulateur de tension (204) pour commuter l'unité de traitement (102) vers le mode haute performance.

11. Procédé selon la revendication 9, dans lequel la valeur de courant du signal de courant surveillé est proportionnelle à la charge de sortie fournie par le régulateur de tension (204) à l'unité de traitement (102).

12. Procédé selon la revendication 9, dans lequel la vitesse désignée se situe dans une plage entre une première vitesse de fonctionnement et une seconde vitesse de fonctionnement plus élevée du dispositif de refroidissement.

13. Support non transitoire lisible par ordinateur comprenant des instructions lisibles par ordinateur qui, lorsqu'elles sont exécutées par une unité de traitement (102), amènent un moteur de commande (106, 216) au sein d'un dispositif informatique (100, 200, 608) à :
surveiller un signal de courant, dans lequel le signal de courant est proportionnel à une charge de sortie fournie par un régulateur de tension (204) à l'unité de traitement (102) ;
déterminer une valeur de courant du signal de courant surveillé ;
comparer la valeur de courant déterminée du signal de courant surveillé avec une valeur seuil prédéfinie ;
sur la base de la comparaison, commander la vitesse de fonctionnement d'un dispositif de refroidissement positionné à proximité de l'unité de traitement, dans lequel, pour commander la vitesse de fonctionnement, les instructions doivent en outre :
augmenter une vitesse de fonctionnement du dispositif de refroidissement à une vitesse désignée lors de la détermination du fait que la valeur de courant est supérieure à la valeur seuil prédéfinie, dans lequel la valeur de courant étant supérieure indique que l'unité de traitement a commuté vers un mode haute performance ; et
commander une vitesse de fonctionnement sur la base de la température de l'unité de traitement (102) lors de la détermination du fait que la valeur de courant est inférieure à la valeur seuil prédéfinie, dans lequel la valeur de courant déterminée étant inférieure indique que l'unité de traitement fonctionne dans un mode de fonctionnement normal.

14. Support non transitoire lisible par ordinateur selon la revendication 13, dans lequel les instructions doivent en outre maintenir le dispositif de refroidissement pour qu'il fonctionne à la vitesse désignée pendant une durée pendant laquelle l'unité de traitement (102) fonctionne dans le mode haute performance.

15. Support non transitoire lisible par ordinateur selon la revendication 13, dans lequel l'unité de traitement (102) fonctionnant dans le mode de fonctionnement normal fonctionne à une fréquence d'horloge qui est inférieure à la fréquence d'horloge de l'unité de traitement (102) fonctionnant dans le mode haute performance.
